(19) Europäisches Patentamt
European Patent Office
Office européen des brevets

(11) **EP 2 512 249 B1**

(12) **EUROPÄISCHE PATENTSCHRIFT**

(45) Veröffentlichungstag und Bekanntmachung des Hinweises auf die Patenterteilung:
**01.06.2016 Patentblatt 2016/22**

(21) Anmeldenummer: **10796001.5**

(22) Anmeldetag: **13.12.2010**

(51) Int Cl.:
*A01P 13/02* (2006.01)          *A01N 33/18* (2006.01)
*A01N 43/82* (2006.01)          *A01N 43/707* (2006.01)

(86) Internationale Anmeldenummer:
**PCT/EP2010/069462**

(87) Internationale Veröffentlichungsnummer:
**WO 2011/082963 (14.07.2011 Gazette 2011/28)**

(54) **HERBIZIDE MITTEL ENTHALTEND FLUFENACET**

HERBICIDES COMPRISING FLUFENACET

HERBICIDES COMPRÉNANT FLUFENACET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2009 DE 102009054856**

(43) Veröffentlichungstag der Anmeldung:
**24.10.2012 Patentblatt 2012/43**

(73) Patentinhaber: **Bayer Intellectual Property GmbH 40789 Monheim (DE)**

(72) Erfinder:
* **MENNE, Hubert**
  **55252 Mainz-Kastel (DE)**
* **CROSS, Susan**
  **3717 Flowerdale via Yea (AU)**
* **SCHREIBER, Dominique**
  **40237 Düsseldorf (DE)**
* **MARCELES PALMA, Victor, Jose**
  **40213 Düsseldorf (DE)**

(56) Entgegenhaltungen:
WO-A2-01/39597          WO-A2-2009/112486
WO-A2-2009/141367          US-A- 5 759 955
US-A1- 2008 305 952

* **Janice Reed, Donn Thill, John Holman: "Downy brome control in established Kentucky bluegrass", , 2005, XP009171667, Retrieved from the Internet: URL:http://www.cals.uidaho.edu/bluegrass/FromJohnKentucky%20bluegrass/study%20overvi ews%20and%20objectives/BROTE%20report%2 020 05.doc**

Bemerkungen:
Die Akte enthält technische Angaben, die nach dem Eingang der Anmeldung eingereicht wurden und die nicht in dieser Patentschrift enthalten sind.

EP 2 512 249 B1

**Beschreibung**

Die Erfindung liegt auf dem technischen Gebiet der Pflanzenschutzmittel, die gegen Schadpflanzen z.B. in Pflanzenkulturen eingesetzt werden können und als Wirkstoffe in den herbiziden Mitteln eine Kombination von Flufenacet und mehreren weiteren Herbiziden enthalten.

Der herbizide Wirkstoff Flufenacet (Hersteller: Bayer CropScience) zeichnet sich durch eine breite Wirksamkeit gegen mono- und dikotyle Schadpflanzen aus und wird zum Beispiel (z.B.) im Vorsaatverfahren, im Vorauflauf oder im Nachauflauf in gesäten und/oder gepflanzten landwirtschaftlichen oder gärtnerischen Kulturpflanzen sowie auf Nicht-Kulturflächen eingesetzt (z.B. in Getreide wie beispielsweise Weizen, Gerste, Roggen, Hafer, Triticale, Reis, Mais, Hirse, Zuckerrübe, Zuckerrohr, Raps, Baumwolle, Sonnenblumen, Soja, Kartoffel, Tomaten, Bohnen, Flachs, Weidegras, Obstanbauanlagen, Plantagenkulturen, Grün- und Rasenflächen sowie Plätzen von Wohn- und Industrieanlagen, Gleisanlagen).

Als Einzelwirkstoff ist Flufenacet beispielweise unter den Handelsnamen Cadou®, Drago®, Define® und Tiara® im Handel. Neben der Verwendung des Einzelwirkstoffs sind auch Mischungen von Flufenacet mit anderen Herbiziden literaturbekannt (z.B. US 5985797 B, US 5593942 B, US 5912206 B, US 5811373 B, US 5858920 B; US 6967188 B, US 6492301 B, US 6864217 B, US 6486096 B; US 2003/0069138 A, WO 2002/058472 A, US 6365550 B, US 2003/0060367 A, US 6878675 B, US 6071858 B, WO 2007/112834 A) und im Handel: Mischung mit Metribuzin (z.B. Axiom®, Bastille®, Artist®, Domain®, Plateen®, Fedor®, Draeda®), mit Isoxaflutole (z.B. Epic®, Cadou Star®), mit Metosulam (z.B. Diplôme®, Terano®), mit Diflufenican (z.B. Herold®, Liberator®), mit 2,4-D (z.B. Drago 3.4®), mit Atrazin (z.B. Aspect®), mit Pendimethalin (z.B. Crystal®, Malibu Pack®), mit Atrazin und Metribuzin (z.B. Axiom AT®) und mit Diflufenican und Flurtamone (z.B. Baccara FORTE®), US 5759955 A beschreibt herbizide Mischungen enthaltend eine synergistische Mischung aus Flufenacet und Metribuzin.

Trotz der guten Wirkung von Flufenacet als Einzelwirkstoff und in den bereits bekannten Mischungen besteht immer noch Notwendigkeit zur Verbesserung des Anwendungsprofils dieses Wirkstoffs in speziellen Einsatzbereichen. Die Gründe hierfür sind vielfältig, wie z.B. weitere Erhöhung der Wirksamkeit in speziellen Anwendungsbereichen, Steigerung der Kulturpflanzenverträglichkeit, Reaktion auf neue Produktionstechniken in einzelnen Kulturen und/oder auf das zunehmende Auftreten von herbizd-resistenten Schadpflanzen (z.B. TSR und EMR Resistenzen bei ALS und ACCase), z.B. in Getreide, Reis und Mais. Diese Verbesserungen des Anwendungsprofils können sowohl einzeln wie aber auch in Kombination untereinander von Bedeutung sein.

Eine Möglichkeit zur Verbesserung des Anwendungsprofils eines Herbizids kann in der Kombination des Wirkstoffs mit einem oder mehreren geeigneten anderen Wirkstoffen bestehen. Allerdings treten bei der kombinierten Anwendung mehrerer Wirkstoffe nicht selten Phänomene der physikalischen und biologischen Unverträglichkeit auf, z.B. mangelnde Stabilität in einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt. Erwünscht sind auch Kombinationen von Wirkstoffen, die die Kulturpflanzenverträglichkeit allgemein erhöhen und/oder bei speziellen Produktionstechniken eingesetzt werden können. Hierzu gehört beispielsweise eine Reduktion der Saattiefe, welche aus Kulturverträglichkeitsgründen häufig nicht verwendet werden kann. Dadurch erzielt man allgemein einen schnelleren Auflauf der Kultur, reduziert deren Risiko gegenüber Auflaufkrankheiten (wie z.B. Pythium und Rhizoctonia), verbessert die Überwinterungsfähigkeit und den Bestockungsgrad. Dies gilt auch für Spät-Saaten, die ansonsten nicht möglich wären aufgrund des Kulturverträglichkeitsrisikos.

Aufgabe der vorliegenden Erfindung bestand in der Verbesserung des Anwendungsprofils des herbiziden Wirkstoffs Flufenacet mit Hinblick auf:

- eine Verbesserung die Anwendungsflexibilität der Wirkstoffe vom Vorauflauf bis in den Nachauflauf der Kultur- und der Unkrautpflanzen.
- eine Verbesserung die Anwendungsflexibilität der Wirkstoffe, die eine Applikation vor der Aussaat der Kultur ermöglichen würde.
- eine Verbesserung und Anwendungsflexibilität der Wirkungssicherheit auf Böden mit unterschiedlichen Bodeneigenschaften.
- eine Verbesserung und Anwendungsflexibilität der Wirkungssicherheit bei unterschiedlichen Bewässerungsverfahren (Regenereignisse)
- eine Verbesserung der Wirkungssicherheit auf resistente Unkrautpflanzenarten, welches eine neue Möglichkeit für ein effektives Resistenzmanagement ermöglichen würde.
- eine Verbesserung der Wirkungssicherheit auf Unkrautpflanzen die aus unterschiedlichen Bodentiefen keimen.
- eine Verbesserung und Anwendungsflexibilität auf Böden mit unterschiedlichen pH-Werten

Gelöst wurde diese Aufgabe durch Bereitstellung von herbiziden Mitteln enthaltend Flufenacet und die weiteren Herbiziden Pendimethalin und Metribuzin.

Ein Gegenstand der Erfindung sind somit herbizide Mittel, enthaltend als einzige herbizid wirksame Bestandteile:

A) Flufenacet (Komponente A),
B) Pendimethalin (Komponente B) und
C) Metribuzin (Komponente C).

wobei die Herbizid-Komponenten gemeinsam ausgebracht werden und worin die Herbizid-Komponenten im nachstehend angegebenen Gewichtsverhältnis zueinander stehen: (Bereich Komponente A) : (Bereich Komponente B) : (Bereich Komponente C) (1-10) : (20-75) : (1-10).

Die in dieser Beschreibung mit ihrem "common name" genannten Wirkstoffe (herbizid wirksamen Bestandteile) sind beispielsweise aus "The Pesticide Manual", 14. Auflage 2006/2007, oder in dem entsprechenden "The e-Pesticide Manual", Version 4.0 (2006-07), jeweils herausgegeben vom British Crop Protection Council and the Royal Soc. of Chemistry, und aus "The Compendium of Pesticide Common Names" im Internet (Webseite: http://www.alanwood.net/pesticides/) bekannt.

Die herbizid wirksamen Bestandteile Komponente A, B und C werden im Folgenden summarisch als "(Einzel-)Wirkstoffe", "(Einzel-)Herbizide" oder als "Herbizid-Komponenten" bezeichnet und sind als Einzelstoffe oder als Mischung z.B. bekannt aus "The Pesticide Manual", 14. Auflage (s.o.) und haben dort folgende Eintragungsnummern (Abkürzung: "PM #.." mit der jeweilig laufenden Eintragsnummer/"sequentiell entry number"):

- Komponente A: Flufenacet (PM #381), syn. thiafluamide, z.B. N-(4-fluorophenyl)-N-(1-methylethyl)-2-[[5-(trifluoromethyl)-1,3,4-thiadiazol-2-yl]oxy]acetamide;
- Komponente B: Pendimethalin (PM #640), *N*-(1-ethylpropyl)-3,4-dimethyl-2,6-dinitrobenzenamine;
- Komponente C: Metribuzin (PM #573), z.B. 4-amino-6-(1,1-dimethylethyl)-3-(methylthio)-1,2,4-triazin-5(4*H*)-one.

Wenn im Rahmen dieser Beschreibung die Kurzform des "common name" eines Wirkstoffs verwendet wird, so sind damit - soweit anwendbar - jeweils alle gängigen Derivate, wie die Ester und Salze, und Isomere, insbesondere optische Isomere umfasst, insbesondere die handelsübliche Form bzw. Formen. Wird mit dem "common name" ein Ester oder Salz bezeichnet, so sind damit auch jeweils alle anderen gängigen Derivate wie andere Ester und Salze, die freien Säuren und Neutralverbindungen, und Isomere, insbesondere optische Isomere umfasst, insbesondere die handelsübliche Form bzw. Formen. Die angegebenen chemischen Verbindungsnamen bezeichnen zumindest eine der von dem "common name" umfassten Verbindungen, häufig eine bevorzugte Verbindung.

Soweit in dieser Beschreibung die Abkürzung "AS/ha" verwendet wird, bedeutet dies "Aktivsubstanz pro Hektar", bezogen auf 100%igen Wirkstoff. Alle Prozentangaben in der Beschreibung sind Gewichtsprozente (Abkürzung: "Gew.-%") und beziehen sich, wenn nicht anders definiert, auf das relative Gewicht der jeweiligen Komponente bezogen auf das Gesamtgewicht des herbizide Mittels (z.B. als Formulierung).

Die erfindungsgemäßen herbiziden Mittel weisen einen herbizid wirksamen Gehalt an den Komponenten A, B und C auf und können weitere Bestandteile enthalten, z.B. agrochemische Wirkstoffe aus der Gruppe der Insektizide, Fungizide und Safener und/oder im Pflanzenschutz übliche Zusatzstoffe und/oder Formulierungshilfsmittel, oder zusammen mit diesen eingesetzt werden.

Die erfindungsgemäßen herbiziden Mittel weisen in bevorzugter Ausführungsform als Verbesserung des Anwendungsprofils synergistische Wirkungen auf. Diese synergistischen Effekte werden bei gemeinsamer Ausbringung der Herbizid-Komponenten beobachtet werden.

Die synergistischen Effekte erlauben eine Reduktion der Aufwandmengen der Einzelwirkstoffe, eine höhere Wirkungsstärke bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Die Aufwandmenge der Herbizid-Komponenten und deren Derivate im herbiziden Mittel kann in weiten Bereichen variieren. Bei Anwendungen mit Aufwandmengen von 25 bis 12000 g AS/ha der Herbizid-Komponenten wird im Vor- und Nachauflaufverfahren ein relativ breites Spektrum an annuellen und perennierenden Unkräutern, Ungräsern sowie Cyperaceen bekämpft.

Die Aufwandmengen der jeweiligen Herbizid-Komponenten im herbiziden Mittel sind:

- Komponente A: im allgemeinen 10 - 2000 g AS/ha, vorzugsweise 30 - 400 g AS/ha, besonders bevorzugt 50 - 300 g AS/ha Flufenacet;
- Komponente B: im allgemeinen 10 - 5000 g AS/ha, vorzugsweise 200 - 4000 g AS/ha, besonders bevorzugt 600 - 2200 g AS/ha Pendimethalin;
- Komponente C: im allgemeinen 5 - 5000 g AS/ha, vorzugsweise 20 - 500 g AS/ha, besonders bevorzugt 30 - 300 g AS/ha Metribuzin.

Entsprechend können aus den oben genannten Aufwandmengen die Gewichtsprozente (Gew.-%) der Herbizid-Komponenten bezogen auf das Gesamtgewicht der herbiziden Mittel berechnet werden, die zusätzlich auch noch weitere Bestandteile enthalten können.

Zur Anwendung der Wirkstoffe der erfindungsgemäßen herbiziden Mittel in Pflanzenkulturen kann es je nach Pflanzenkultur zweckmäßig sein, ab bestimmter Aufwandmengen einen Safener zu applizieren, um eventuelle Schäden an der Kulturpflanze zu reduzieren oder zu vermeiden. Solche Safener sind dem Fachmann bekannt. Geeignete Safener sind (S1-1) Mefenpyr(-diethyl), (S1-7) Fenchlorazole(-ethyl), (S1-12) Isoxadifen(-ethyl), (S2-1) Cloquintocet(-mexyl), (S3-1) Dichlormid, (S3-2) R-29148 (3-Dichloracetyl-2,2,5-trimethyl-1,3-oxazolidin), (S3-3) R-28725 (3-Dichloracetyl-2,2,-dimethyl-1,3-oxazolidin), (S3-4) Benoxacor, (S3-5) PPG-1292 (N-Allyl-N-[(1,3-dioxolan-2-yl)-methyl]-dichloracetamid), (S3-6) DKA-24 (N-Allyl-N-[(allylaminocarbonyl)-methyl]-dichloracetamid), (S3-7) AD-67/MON 4660 (3-Dichloracetyl-1-oxa-3-aza-spiro[4,5]decan), (S3-8) TI-35 (1-Dichloracetyl-azepan), (S3-9) Dicyclonon, (S3-10)/(S3-11) Furilazole, (S4-1) Cyprosulfamide, (S7-1) Methyl-(diphenylmethoxy)acetat (CAS-Regno: 41858-19-9), (S9-1) 1,2-Dihydro-4-hydroxy-1-methyl-3-(5-tetrazolyl-carbonyl)-2-chinolon (CAS-Regno: 95855-00-8), (S11-1) Oxabetrinil, (S11-2) Fluxofenim, (S11-3) Cyometrinil, (S12-1) Methyl-[(3-oxo-1H-2-benzothiopyran-4(3H)-yliden)methoxy]acetate (CAS-Regno: 205121-04-6), (S13-1) Naphthalic anhydride, (S13-2) Fenclorim, (S13-3) Flurazole, (S13-4) CL-304415 (4-Carboxy-3,4-dihydro-2H-1-benzopyran-4-essigsäure), (S13-5) MG-191 (2-Dichlormethyl-2-methyl-1,3-dioxolan), (S13-6) MG-838 (2-propenyl 1-oxa-4-azaspiro[4.5]decane-4-carbodithioate), (S13-7) Disulfoton (O,O-Diethyl S-2-ethylthioethyl phosphordithioat), (S13-8) Dietholate, (S13-9) Mephenate; besonders bevorzugt (S1-1) Mefenpyr(-diethyl), (S1-7) Fenchlorazole(-ethyl), (S1-12) Isoxadifen(-ethyl), (S2-1) Cloquintocet (-mexyl), (S3-1) Dichlormid, (S3-4) Benoxacor, (S3-7) AD-67/MON 4660 (3-Dichloracetyl-1-oxa-3-aza-spiro[4,5]decan), (S3-8) TI-35 (1-Dichloracetyl-azepan), (S3-10)/(S3-11) Furilazole, (S4-1) Cyprosulfamide, (S11-1) Oxabetrinil, (S11-2) Fluxofenim, (S11-3) Cyometrinil, (S13-1) Naphthalic anhydride, (S13-2) Fenclorim, (S13-3) Flurazole; ganz besonders bevorzugt (S1-1) Mefenpyr(-diethyl), (S1-7) Fenchlorazole(-ethyl), (S1-12) Isoxadifen(-ethyl), (S2-1) Cloquintocet (-mexyl), (S3-1) Dichlormid, (S3-4) Benoxacor, (S3-7) AD-67/MON 4660 (3-Dichloracetyl-1-oxa-3-aza-spiro[4,5]decan), (S3-10)/(S3-11) Furilazole, (S4-1) Cyprosulfamide, (S11-2) Fluxofenim, (S13-2) Fenclorim, (S13-3) Flurazole, (S14-1) Daimuron (syn. SK 23, 1-(1-Methyl-1-phenylethyl)-3-p-tolyl-harnstoff).

Besonders bevorzugte Kombinationen von erfindungsgemäßen herbiziden Mitteln und Safenern sind solche, bei denen der Safener ausgewählt ist aus der Gruppe von Safenern bestehend aus den Verbindungen (S1-1) Mefenpyr(-diethyl), (S1-12) Isoxadifen(-ethyl), (S2-1) Cloquintocet (-mexyl), (S4-1) Cyprosulfamide, ganz besonders bevorzugt als Safener sind (S1-1) Mefenpyr(-diethyl), (S1-12) Isoxadifen(-ethyl), und (S4-1) Cyprosulfamide. Für die Anwendung in Reis besonders bevorzugt sind (S1-12) Isoxadifen(-ethyl), (S13-2) Fenclorim und (S14-1) Daimuron. Für die Anwendung in Getreide besonders bevorzugt sind (S1-1) Mefenpyr(-diethyl), (S2-1) Cloquintocet (-mexyl), (S4-1) Cyprosulfamide, in Mais insbesondere (S1-12) Isoxadifen(-ethyl), (S3-1) Dichlormid, (S3-4) Benoxacor und (S4-1) Cyprosulfamide. Für die Anwendung in Zuckerrohr bevorzugt ist (S1-12) Isoxadifen(-ethyl) und (S4-1) Cyprosulfamide.

Die benötigten Aufwandmengen der Safener können je nach Indikation und den verwendetem Mengen der erfindungsgemäßen herbiziden Mittel innerhalb weiter Grenzen schwanken und sind in der Regel im Bereich von 1 bis 5000 g, vorzugsweise 5 bis 2500 g, insbesondere 10 bis 1000 g Wirkstoff je Hektar.

Das Gewichtsverhältnis der erfindungsgemäßen herbiziden Mittel : Safener kann innerhalb weiter Grenzen variieren und liegt vorzugsweise im Bereich von 1 : 50000 bis 500 : 1, insbesondere 1 : 8000 bis 250 : 1, ganz besonders bevorzugt 1 : 2500 bis 50 : 1. Die jeweils optimalen Mengen der erfindungsgemäßen herbiziden Mittel und Safener sind sowohl vom Typ des verwendeten Safeners sowie von der Art und dem Entwicklungsstadium des zu behandelnden Pflanzenbestandes abhängig und lassen sich von Fall zu Fall durch einfache, routinemäßige Vorversuche ermitteln.

In Hinblick auf die Applikation werden erfindungsgemäße herbizide Mittel und Safener beispielsweise als Co-Formulierung oder als Tankmischung gemeinsam ausgebracht.

Erfindungsgemäß umfasst sind auch solche Herbizid-Kombinationen, die neben den Komponenten A, B und C noch ein oder mehrere weitere agrochemische Wirkstoffe aus der Gruppe der Insektizide und Fungizide enthalten. Für solche Kombinationen gelten die vorstehend erläuterten bevorzugten Bedingungen.

Die erfindungsgemäßen herbiziden Mittel weisen eine ausgezeichnete herbizide Wirksamkeit gegen ein breites Spektrum wirtschaftlich wichtiger mono- und dikotyler Schadpflanzen wie Unkräuter, Ungräser oder Cyperaceen auf, einschließlich Arten die resistent sind gegen herbizide Wirkstoffe, wie z.B. Glyphosate, Glufosinate, Atrazin, Photosyntheseinhibitoren, Imidazolinon-Herbizide, Sulfonylharnstoffe, (Hetero-)aryloxy-aryloxyalkylcarbonsäuren bzw. -phenoxyalkylcarbonsäuren (sog. 'Fops'), Cyclohexanedionoxime (sog. 'Dims') oder Auxininhibitoren. Auch schwer bekämpfbare perennierende Unkräuter, die aus Rhizomen, Wurzelstöcken oder anderen Dauerorganen austreiben, werden durch die Wirkstoffe gut erfasst.

Im einzelnen seien beispielhaft einige Vertreter der mono- und dikotylen Unkrautflora genannt, die durch die erfindungsgemäßen herbiziden Mittel kontrolliert werden können, ohne dass durch die Nennung eine Beschränkung auf bestimmte Arten erfolgen soll.

Auf der Seite der monokotylen Unkrautarten werden z.B. Avena spp., Alopecurus spp., Apera spp., Brachiaria spp., Bromus spp., Digitaria spp., Lolium spp., Echinochloa spp., Leptochloa spp., Fimbristylis spp., Panicum spp., Phalaris spp., Poa spp., Setaria spp. sowie Cyperusarten aus der annuellen Gruppe und auf seiten der perennierenden Spezies Agropyron, Cynodon, Imperata sowie Sorghum und auch ausdauernde Cyperusarten gut erfasst.

Bei dikotylen Unkrautarten erstreckt sich das Wirkungsspektrum auf Arten wie z.B. Abutilon spp., Amaranthus spp., Chenopodium spp., Chrysanthemum spp., Galium spp., Ipomoea spp., Kochia spp., Lamium spp., Matricaria spp., Pharbitis spp., Polygonum spp.,Sida spp., Sinapis spp., Solanum spp., Stellaria spp., Veronica spp. Eclipta spp., Sesbania spp., Aeschynomene spp. und Viola spp., Xanthium spp., auf der annuellen Seite sowie Convolvulus, Cirsium, Rumex und Artemisia bei den perennierenden Unkräutern.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von zwei bis vier Wochen vollkommen ab.

Bei Applikation der erfindungsgemäßen herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird. Die erfindungsgemäßen herbiziden Mittel können auch in Reis in das Wasser appliziert werden und werden dann über Boden, Sproß und Wurzel aufgenommen.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Mitteln ist in der Regel günstig. Als besonderer Vorteil fällt ins Gewicht, dass die in den erfindungsgemäßen Mitteln verwendeten und wirksamen Dosierungen der Komponenten A, B und C so gering eingestellt werden können, dass ihre Bodenwirkung optimal niedrig ist. Somit wird deren Einsatz nicht nur in empfindlichen Kulturen erst möglich, sondern Grundwasser-Kontaminationen werden auch praktisch vermieden. Durch die erfindungsgemäße Kombination von Wirkstoffen wird eine erhebliche Reduzierung der nötigen Aufwandmenge der Wirkstoffe ermöglicht.

Bei der gemeinsamen Anwendung der Komponenten A, B und C in den erfindungsgemäßen Mitteln treten in bevorzugter Ausführungsform als Verbesserung des Anwendungsprofils überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine höhere und/oder längere Wirkungsstärke (Dauerwirkung); die Bekämpfung eines breiteren Spektrums von Unkräutern, Ungräsern und Cyperaceen, zum Teil mit nur einer bzw. wenigen Applikationen; schnelleres Einsetzen der herbiziden Wirkung; Kontrolle bislang nicht erfasster Arten (Lücken); Kontrolle z.B. von Arten, die Toleranzen oder Resistenzen gegenüber einzelnen oder mehreren Herbiziden aufweisen; Ausdehnung des Anwendungszeitraums und/oder eine Reduzierung der Anzahl notwendiger Einzelanwendungen bzw. eine Reduzierung der Aufwandmenge insgesamt und - als Resultat für den Anwender - ökonomisch und ökologisch vorteilhaftere Unkrautbekämpfungssysteme.

Die genannten Eigenschaften und Vorteile sind in der praktischen Unkrautbekämpfung gefordert, um landwirtschaftliche/ forstwirtschaftliche/ gärtnerische Kulturen, Grünland/Weideflächen oder Kulturen zur Energiegewinnung (Biogas, Bio-Ethanol) von unerwünschten Konkurrenzpflanzen freizuhalten und damit die Erträge qualitativ und quantitativ zu sichern und/oder zu erhöhen. Der technische Standard wird durch diese neuen Kombinationen in den erfindungsgemäßen herbiziden Mittel hinsichtlich der beschriebenen Eigenschaften deutlich übertroffen.

Obgleich die erfindungsgemäßen herbiziden Mittel eine ausgezeichnete herbizide Aktivität gegenüber mono- und dikotylen Schadpflanzen aufweisen, werden die Kulturpflanzen nur unwesentlich oder gar nicht geschädigt.

Darüber hinaus können die erfindungsgemäßen Mittel teilweise wachstumsregulatorische Eigenschaften bei den Kulturpflanzen aufweisen. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativem Wachstum, ohne dabei die Pflanzen abzutöten. Eine Hemmung des vegetativen Wachstums spielt bei vielen mono- und dikotylen Kulturen eine große Rolle, da Ernteverluste beim Lagern hierdurch verringert oder völlig verhindert werden können.

Aufgrund ihres verbesserten Anwendungsprofils können die erfindungsgemäßen Mittel auch zur Bekämpfung von Schadpflanzen in bekannten Pflanzenkulturen oder noch zu entwickelnden toleranten oder gentechnisch veränderten Kultur- und Energiepflanzen eingesetzt werden. Die transgenen Pflanzen (GMOs) zeichnen sich in der Regel durch besondere vorteilhafte Eigenschaften aus, beispielsweise durch Resistenzen gegenüber bestimmten Pestiziden, vor allem bestimmten Herbiziden (wie z.B. Resistenzen gegenüber den Komponenten A, B und C in den erfindungsgemäßen Mitteln), beispielsweise durch Resistenzen gegenüber Schadinsekten, Pflanzenkrankheiten oder Erregern von Pflanzenkrankheiten wie bestimmten Mikroorganismen wie Pilzen, Bakterien oder Viren. Andere besondere Eigenschaften betreffen z.B. das Erntegut hinsichtlich Menge, Qualität, Lagerfähigkeit, sowie der Zusammensetzung von speziellen Inhaltsstoffen. So sind transgene Pflanzen mit erhöhtem Stärkegehalt oder veränderter Qualität der Stärke oder solche mit anderer Fettsäurezusammensetzung des Ernteguts bzw. erhöhtem Vitamingehalt oder energetischer Eigenschaften bekannt. Weitere besondere Eigenschaften können in einer Toleranz oder Resistenz gegen abiotische Stressoren z.B. Hitze, Kälte, Trockenheit, Salz und ultraviolette Strahlung liegen. Gleichermaßen können die erfindungsgemäßen Mittel aufgrund ihrer herbiziden und weiteren Eigenschaften auch zur Bekämpfung von Schadpflanzen in Kulturen von bekannten oder noch zu entwickelnden durch Mutantenselektion erhaltenen Pflanzen eingesetzt werden, sowie aus Kreuzungen von mutagenen und transgenen Pflanzen.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z.B. EP 0221044 A, EP 0131624 A). Beschrieben wurden beispielsweise in mehreren Fällen: gentechnische Veränderungen von Kulturpflanzen zwecks Modifikation der in den Pflanzen synthetisierten Stärke (z.B. WO 92/011376 A, WO 92/014827 A, WO 91/019806 A); transgene Kulturpflanzen, welche gegen bestimmte Herbizide vom Typ Glufosinate (vgl. z.B. EP 0242236 A, EP 0242246 A) oder Glyphosate (WO 92/000377 A) oder der Sulfonylharnstoffe (EP 0257993 A, US 5,013,659) oder gegen Kombinationen oder Mischungen dieser Herbizide durch "gene stacking" resistent sind, wie transgenen Kulturpflanzen z. B. Mais oder Soja mit dem Handelsnamen oder der Bezeichnung Optimum™ GAT™ (Glyphosate ALS Tolerant); transgene Kulturpflanzen, beispielsweise Baumwolle, mit der Fähigkeit Bacillus thuringiensis-Toxine (Bt-Toxine) zu produzieren, welche die Pflanzen gegen bestimmte Schädlinge resistent machen (EP 0142924 A, EP 0193259 A); transgene Kulturpflanzen mit modifizierter Fettsäurezusammensetzung (WO 91/013972 A); gentechnisch veränderte Kulturpflanzen mit neuen Inhalts- oder Sekundärstoffen z.B. neuen Phytoalexinen, die eine erhöhte Krankheitsresistenz verursachen (EP 0309862 A, EP 0464461 A); gentechnisch veränderte Pflanzen mit reduzierter Photorespiration, die höhere Erträge und höhere Stresstoleranz aufweisen (EP 0305398 A); transgene Kulturpflanzen, die pharmazeutisch oder diagnostisch wichtige Proteine produzieren ("molecular pharming"); transgene Kulturpflanzen, die sich durch höhere Erträge oder bessere Qualität auszeichnen; transgene Kulturpflanzen die sich durch eine Kombinationen z.B. der o.g. neuen Eigenschaften auszeichnen ("gene stacking").

Zahlreiche molekularbiologische Techniken, mit denen neue transgene Pflanzen mit veränderten Eigenschaften hergestellt werden können, sind im Prinzip bekannt; siehe z.B. I. Potrykus und G. Spangenberg (eds.) Gene Transfer to Plants, Springer Lab Manual (1995), Springer Verlag Berlin, Heidelberg. oder Christou, "Trends in Plant Science" 1 (1996) 423-431). Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe von Standardverfahren können z.B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden, siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codierenden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z.B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106). Die Expression der Nukleinsäuremoleküle kann auch in den Organellen der Pflanzenzellen stattfinden.

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der vorliegenden Erfindung ist weiterhin auch ein Verfahren zur Bekämpfung von unerwünschtem Pflanzenwuchs (z.B. Schadpflanzen), vorzugsweise in Pflanzenkulturen wie Getreide (z.B. Hart- und Weichweizen, Gerste, Roggen, Hafer, Kreuzungen davon wie Triticale, gepflanztem oder gesäten Reis unter'Upland'- oder'Paddy'-Bedingungen, Mais, Hirsen wie beispielsweise Sorghum), Zuckerrübe, Zuckerrohr, Raps, Baumwolle, Sonnenblumen, Soja, Kartoffel, Tomaten, Bohnen wie beispielsweise Buschbohne und Pferdebohne, Flachs, Weidegras, Obstanbauanlagen, Plantagenkulturen, Grün- und Rasenflächen sowie Plätzen von Wohn- und Industrieanlagen, Gleisanlagen, besonders bevorzugt in monokotylen Kulturen wie Getreide, z.B. Weizen, Gerste, Roggen, Hafer, Kreuzungen davon wie Triticale, Reis, Mais und Hirse sowie dikotylen Kulturen wie Sonnenblumen, Soja, Kartoffel, Tomaten, wobei man die Komponenten A, B und C der erfindungsgemäßen herbiziden Mittel gemeinsam auf die Pflanzen, z.B. Schadpflanzen, Pflanzenteile, Pflanzensamen oder die Fläche auf der die Pflanzen wachsen, z.B. die Anbaufläche appliziert.

Gegenstand der Erfindung ist auch das Verfahren mit den erfindungsgemäßen herbiziden Mittel enthaltend die Komponenten A, B und C zur selektiven Bekämpfung von Schadpflanzen in Pflanzenkulturen, vorzugsweise in den oben genannten Pflanzenkulturen, sowie dessen Verwendung.

Gegenstand der Erfindung ist auch das Verfahren zur Bekämpfung von unerwünschtem Pflanzenwuchs mit den erfindungsgemäßen herbiziden Mittel enthaltend die Komponenten A, B und C, sowie dessen Verwendung, in Pflanzenkulturen, die gentechnisch verändert (transgen) oder durch Mutationsselektion erhalten wurden, und welche gegen Wuchsstoffe, wie z.B. 2,4 D, Dicamba oder gegen Herbizide, die essentielle Pflanzenenzyme, z.B. Acetolactatsynthasen (ALS), EPSP Synthasen, Glutaminsynthasen (GS) oder Hydoxyphenylpyruvat Dioxygenasen (HPPD) hem-men, respective gegen Herbizide aus der Gruppe der Sulfonylharnstoffe, der Glyphosate, Glufosinate oder Benzoylisoxazole und analogen Wirkstoffe, oder gegen beliebige Kombinationen dieser Wirkstoffe, resistent sind. Besonders bevorzugt können die erfindungsgemäßen herbiziden Mittel in transgenen Kulturpflanzen eingesetzt werden, die gegen eine Kombination von Glyphosaten und Glufosinaten, Glyphosaten und Sulfonylharnstoffen oder Imidazolinonen resistent sind. Ganz besonders bevorzugt können die erfindungsgemäßen herbiziden Mittel in transgenen Kulturpflanzen wie z. B. Mais oder Soja mit dem Handelsnamen oder der Bezeichnung Optimum™ GAT™ (Glyphosate ALS Tolerant) eingesetzt werden.

Gegenstand der Erfindung ist auch die Verwendung der erfindungsgemäßen herbiziden Mittel enthaltend die Komponenten A, B und C zur Bekämpfung von Schadpflanzen, vorzugsweise in Pflanzenkulturen, vorzugsweise in den oben genannten Pflanzenkulturen.

Die erfindungsgemäßen herbiziden Mittel können auch nicht-selektiv zur Bekämpfung unerwünschten Pflanzenwuchses eingesetzt werden, z.B. in Plantagenkulturen, an Wegrändern, Plätzen, Industrieanlagen oder Eisenbahnanlagen; oder selektiv zur Bekämpfung unerwünschten Pflanzenwuchses in Kulturen zur Energiegewinnung (Biogas, Bio-Ethanol) eingesetzt werden.

Die erfindungsgemäßen herbiziden Mittel liegen als Mischformulierungen der Komponenten A, B und C und gegebenenfalls mit weiteren agrochemischen Wirkstoffen, Zusatzstoffen und/oder üblichen Formulierungshilfsmitteln vor, die dann in üblicher Weise mit Wasser verdünnt zur Anwendung gebracht werden.

Die Komponenten A, B und C oder deren Unterkombinationen können auf verschiedene Art formuliert werden, je nachdem welche biologischen und/oder chemisch-physikalischen Parameter vorgegeben sind. Als allgemeine Formulierungsmöglichkeiten kommen beispielsweise in Frage: Spritzpulver (WP), wasserlösliche Konzentrate, emulgierbare Konzentrate (EC), wässrige Lösungen (SL), Emulsionen (EW) wie Öl-in-Wasser- und Wasser-in-Öl-Emulsionen, versprühbare Lösungen oder Emulsionen, Suspensionskonzentrate (SC), Dispersionen, Öldispersionen (OD), Suspoemulsionen (SE), Stäubemittel (DP), Beizmittel, Granulate zur Boden- oder Streuapplikation (GR) oder wasserdispergierbare Granulate (WG), Ultra-Low-Volume-Formulierungen, Mikrokapsel- oder Wachsdispersionen.

Die einzelnen Formulierungstypen sind im Prinzip bekannt und werden beispielsweise beschrieben in: "Manual on Development and Use of FAO and WHO Specifications for Pesticides", FAO and WHO, Rome, Italy, 2002; Winnacker-Küchler, "Chemische Technologie", Band 7, C. Hanser Verlag München, 4. Aufl. 1986; van Valkenburg, "Pesticide Formulations", Marcel Dekker N.Y. 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hanser Verlag München, 4. Aufl. 1986.

Auf der Basis dieser Formulierungen lassen sich auch Kombinationen mit anderen agrochemischen Wirkstoffen, wie Fungizide, Insektizide, sowie Safener, Düngemittel und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben den Wirkstoffen außer einem oder mehreren Verdünnungs- oder Inertstoffen noch Tenside ionischer und/oder nichtionischer Art (Netzmittel, Dispergiermittel), z.B. polyoxethylierte Alkylphenole, polyethoxylierte Fettalkohole oder -Fettamine, Propylenoxid-Ethylenoxid-Copolymerisate, Alkansulfonate oder Alkylbenzolsulfonate oder Alkylnaphthalinsulfonaten, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen der Wirkstoffe in einem organischen Lösungsmittel oder Lösungsmittelgemisch, z.B. Butanol, Cyclohexanon, Dimethylformamid, Acetophenon, Xylol oder auch höhersiedenden Aromaten oder Kohlenwasserstoffe unter Zusatz von einem oder mehreren ionischen und/oder nichtionischen Tensiden (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Copolymerisate, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Suspensionskonzentrate sind Wasser-basierte Suspensionen von Wirkstoffen. Sie können beispielsweise durch Nass-Vermahlung mittels handelsüblicher Perlmühlen und gegebenenfalls Zusatz von weiteren Tensiden, wie sie z.B. oben bei den anderen Formulierungstypen bereits aufgeführt sind, hergestellt werden. Neben dem suspendierten Wirkstoff bzw. Wirkstoffen, können weitere Wirkstoffe in der Formulierung auch gelöst vorliegen.

Öldispersionen sind Öl-basierte Suspensionen von Wirkstoffen, wobei unter Öl jegliche organische Flüssigkeit zu verstehen ist, z. B. Pflanzenöle, aromatische oder aliphatische Lösemittel, oder Fettsäurealkylester. Sie können beispielsweise durch Nass-Vermahlung mittels handelsüblicher Perlmühlen und gegebenenfalls Zusatz von weiteren Tensiden (Netzmittel, Dispergiermittel), wie sie z.B. oben bei den anderen Formulierungstypen bereits aufgeführt sind, hergestellt werden. Neben dem suspendierten Wirkstoff bzw. Wirkstoffen, können weitere Wirkstoffe in der Formulierung auch gelöst vorliegen.

Emulsionen, z.B. Öl-in-Wasser-Emulsionen (EW), lassen sich beispielsweise mittels Rührern, Kolloidmühlen und/oder statischen Mischern aus Mischungen aus Wasser und mit Wasser nicht mischbaren organischen Lösungsmitteln und gegebenenfalls von weiteren Tensiden, wie sie z.B. oben bei den anderen Formulierungstypen bereits aufgeführt sind, herstellen. Die Wirkstoffe liegen hierbei in gelöster Form vor.

Granulate können entweder durch Verdüsen des Wirkstoffs auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite, Kreide oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischern und Extrusion ohne festes Inertmaterial hergestellt.

Zur Herstellung von Teller-, Fließbett-, Extruder- und Sprühgranulate siehe z.B. Verfahren in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die agrochemischen Formulierungen enthalten in der Regel 0,1 bis 99 Gewichtsprozent, insbesondere 2 bis 95 Gew.-%, Wirkstoffe der Herbizid-Komponenten, wobei je nach Formulierungsart folgende Konzentrationen üblich sind: In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen. Staubförmige Formulierungen enthalten meistens 5 bis 20 Gew.-% an Wirkstoff, versprühbare Lösungen etwa 0,2 bis 25 Gew.-% Wirkstoff. Bei Granulaten wie dispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%.

Daneben enthalten die genannten Wirkstoffformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Die herbizide Wirkung der erfindungsgemäßen Herbizid-Kombinationen kann z.B. durch oberflächenaktive Substanzen verbessert werden, beispielsweise durch Netzmittel aus der Reihe der Fettalkohol-Polyglykolether. Die Fettalkohol-Polyglykolether enthalten vorzugsweise 10 - 18 C-Atome im Fettalkoholrest und 2 - 20 Ethylenoxideinheiten im Polyglykoletherteil. Die Fettalkohol-Polyglykolether können Natrium- und Kaliumsalze) oder Ammoniumsalze, oder auch als Erdalkalisalze wie Magnesiumsalze, wie $C_{12}/C_{14}$-Fettalkohol-diglykolethersulfat-Natrium (Genapol® LRO, Clariant GmbH); siehe z.B. EP-A-0476555, EP-A-0048436, EP-A-0336151 oder US-A-4,400,196 sowie Proc. EWRS Symp. "Factors Affecting Herbicidal Activity and Selectivity", 227 - 232 (1988). Nichtionische Fettalkohol-Polyglykolether sind beispielsweise 2 - 20, vorzugsweise 3 - 15, Ethylenoxideinheiten enthaltende ($C_{10}$- $C_{18}$)-, vorzugsweise ($C_{10}$-$C_{14}$)-Fettalkohol-Polyglykolether (z.B. Isotridecylalkohol-Polyglykolether) z.B. aus der Genapol® X-Reihe wie Genapol® X-030, Genapol® X-060, Genapol® X-080 oder Genapol® X-150 (alle von Clariant GmbH).

Die vorliegende Erfindung umfasst ferner die Kombination der Komponenten A, B und C mit den vorgängig genannten Netzmitteln aus der Reihe der Fettalkohol-Polyglykolether, die vorzugsweise 10 - 18 C-Atome im Fettalkoholrest und 2 - 20 Ethylenoxideinheiten im Polyglykoletherteil enthalten und nichtionisch oder ionisch (z.B. als Fettalkoholpolyglykolethersulfate) vorliegen können. Bevorzugt sind $C_{12}/C_{14}$-Fettalkohol-diglykolethersulfat-Natrium (Genapol® LRO, Clariant GmbH) und Isotridecylalkohol-Polyglykolether, mit 3 - 15 Ethylenoxideneinheiten, z.B. aus der Genapol® X-Reihe wie Genapol® X-030, Genapol® X-060, Genapol® X-080 und Genapol® X-150 (alle von Clariant GmbH). Weiterhin ist bekannt, daß Fettalkohol-Polyglykolether wie nichtionische oder ionische Fettalkohol-polyglykolether (z.B. Fettalkohol-Polyglykolethersulfate) auch als Penetrationshilfsmittel und Wirkungsverstärker für eine Reihe anderer Herbizide, unter anderem auch für Herbizide aus der Reihe der Imidazolinone geeignet sind (siehe z.B. EP-A-0502014).

Die herbizide Wirkung der erfindungsgemäßen Herbizid-Kombinationen kann auch durch die Verwendung von Pflanzenölen verstärkt werden. Unter dem Begriff Pflanzenöle werden Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl oder Rhizinusöl, insbesondere Rapsöl verstanden, sowie deren Umesterungsprodukte, z.B. Alkylester wie Rapsölmethylester oder Rapsölethylester.

Die Pflanzenöle sind bevorzugt Ester von $C_{10}$-$C_{22}$-, vorzugsweise $C_{12}$-$C_{20}$-Fettsäuren. Die $C_{10}$-$C_{22}$-Fettsäureester sind beispielsweise Ester ungesättigter oder gesättigter $C_{10}$-$C_{22}$-Fettsäuren, insbesondere mit gerader Kohlenstoffatomzahl, z.B. Erucasäure, Laurinsäure, Palmitinsäure und insbesondere $C_{18}$-Fettsäuren wie Stearinsäure, Ölsäure, Linolsäure oder Linolensäure.

Beispiele für $C_{10}$-$C_{22}$-Fettsäure-Ester sind Ester, die durch Umsetzung von Glycerin oder Glykol mit den $C_{10}$-$C_{22}$-Fettsäuren erhalten werden, wie sie z.B. in Ölen aus ölliefernden Pflanzenarten enthalten sind, oder $C_1$-$C_{20}$-Alkyl-$C_{10}C_{22}$-Fettsäure-Ester, wie sie z.B. durch Umesterung der vorgenannten Glycerin- oder Glykol-$C_{10}$-$C_{22}$-Fettsäure-Ester mit $C_1$-$C_{20}$-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Als $C_1$-$C_{20}$-Alkyl-$C_{10}$-$C_{22}$-Fettsäure-Ester bevorzugt sind Methylester, Ethylester, Propylester, Butylester, 2-ethyl-hexylester und Dodecylester. Als Glykol- und Glycerin-$C_{10}$-$C_{22}$-Fettsäure-Ester bevorzugt sind die einheitlichen oder gemischten Glykolester und Glycerinester von $C_{10}$-$C_{22}$-Fettsäuren, insbesondere solcher Fettsäuren mit gerader Anzahl an Kohlenstoffatomen, z.B. Erucasäure, Laurinsäure, Palmitinsäure und insbesondere $C_{18}$-Fettsäuren wie Stearinsäure, Ölsäure, Linolsäure oder Linolensäure.

Die Pflanzenöle können in den erfindungsgemäßen herbiziden Mitteln z.B. in Form kommerziell erhältlicher ölhaltiger Formulierungszusatzstoffe, insbesondere solcher auf Basis von Rapsöl wie Hasten® (Victorian Chemical Company, Australien, nachfolgend Hasten genannt, Hauptbestandteil: Rapsölethylester), Actirob®B (Novance, Frankreich, nachfolgend ActirobB genannt, Hauptbestandteil: Rapsölmethylester), Rako-Binol® (Bayer AG, Deutschland, nachfolgend Rako-Binol genannt, Hauptbestandteil: Rapsöl), Renol® (Stefes, Deutschland, nachfolgend Renol genannt, Pflanzenölbestandteil: Rapsölmethylester) oder Stefes Mero® (Stefes, Deutschland, nachfolgend Mero genannt, Hauptbestandteil: Rapsölmethylester) enthalten sein.

Die vorliegende Erfindung umfasst in einer weiteren Ausführungsform Kombinationen der Komponenten A, B und C mit den vorgängig genannten Pflanzenölen wie Rapsöl, bevorzugt in Form kommerziell erhältlicher ölhaltiger Formulierungszusatzstoffe, insbesondere solcher auf Basis von Rapsöl wie Hasten®, Actirob®B, Rako-Binol®, Renol® oder Stefes Mero®.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Formulierungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden. Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen herbiziden Mittel mit den Komponenten A, B und C hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden.

A. Formulierungsbeispiele allgemeiner Art

a) Ein Stäubemittel wird erhalten, indem man 10 Gew.-Teile eines Wirkstoffs/Wirkstoffgemischs und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile eines Wirkstoffs/Wirkstoffgemischs, 64 Gew.-Teile kaolinhaltigen Ton als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbaren Suspensionskonzentrat wird erhalten, indem man 20 Gew.-Teile eines Wirkstoffs/Wirkstoffgemischs mit 5 Gew.-Teilen Tristyrylphenolpolyglykolether (Soprophor BSU), 1 Gew.-Teil Ligninsulfonat-Natrium (Vanisperse CB) und 74 Gew.-Teilen Wasser mischt und in einer Reibkugelmühle auf eine Feinheit von unter 5 Mikron vermahlt.

d) Eine in Wasser leicht verteilbare Öldispersion wird erhalten, indem man 20 Gew.-Teile eines Wirkstoffs/Wirkstoffgemischs mit 6 Gew.-Teilen Alkylphenolpolyglykolether (Triton® X 207), 3 Gew.-Teilen Isotridecanolpolyglykolether (8 EO) und 71 Gew.-Teilen paraffinischem Mineralöl (Siedebereich z.B. ca. 255 bis 277°C) mischt und in einer Reibkugelmühle auf eine Feinheit von unter 5 Mikron vermahlt.

e) Ein emulgierbares Konzentrat wird erhalten aus 15 Gew.-Teilen eines Wirkstoffs/Wirkstoffgemischs, 75 Gew.-Teilen Cyclohexanon als Lösemittel und 10 Gew.-Teilen oxethyliertem Nonylphenol als Emulgator.

f) Ein in Wasser dispergierbares Granulat wird erhalten indem man
75 Gew.-Teile eines Wirkstoffs/Wirkstoffgemischs,
10 Gew.-Teile ligninsulfonsaures Calcium,
5 Gew.-Teile Natriumlaurylsulfat,
3 Gew.-Teile Polyvinylalkohol und
7 Gew.-Teile Kaolin
mischt, auf einer Stiftmühle mahlt und das Pulver in einem Wirbelbett durch Aufsprühen von Wasser als Granulierflüssigkeit granuliert.

g) Ein in Wasser dispergierbares Granulat wird auch erhalten, indem man
25 Gew.-Teile eines Wirkstoffs/Wirkstoffgemischs,
5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser
auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

B. Biologische Beispiele

a) Methodenbeschreibungen

Gewächshausversuche

In der Standardversuchdurchführung wurden die Samen unterschiedlicher Unkraut und Ungras Biotypen (Herkünfte) in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1 cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden auf einer Laborspritzbahn mit Spritzbrühen mit den erfindungsgemäßen Mitteln, Mischungen des Standes der Technik beziehungsweise mit den einzeln angewandten Komponenten behandelt. Die Applikation der als WG, WP, EC oder anders formulierten Wirkstoffe oder Wirkstoffkombinationen erfolgte zu den entsprechenden Wachstumsstadien der Pflanzen. Die Wasseraufwandmenge für die Spritzapplikation betrug 100-600 l/ha. Nach der Behandlung wurden die Pflanzen wieder in den Gewächshäusern aufgestellt.

Etwa 3 Wochen nach der Applikation wurde die Boden- oder/und Blattwirkung gemäß einer Skala von 0-100% optisch im Vergleich zu einer unbehandelten Vergleichsgruppe bewertet: 0% = keine erkennbare Wirkung im Vergleich zur unbehandelten Vergleichsgruppe; 100% = vollständige Wirkung im Vergleich zur unbehandelten Vergleichsgruppe.

(Anmerkungen: Der Begriff "Samen" umfasst auch vegetative Vermehrungsformen, wie z.B. Rhizomstücke; verwendete Abkürzungen: h Licht = Stunden Beleuchtungsdauer, g AS/ha = Gramm Aktivsubstanz je Hektar, l/ha = Liter je Hektar, S = sensitiv, R = resistent)

1. Unkrautwirkung im Vorauflauf: Samen unterschiedlicher Unkraut und Ungras Biotypen (Herkünfte) wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1 cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden im BBCH Stadium 00-10 der Samen/Pflanzen auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert.

2. Unkrautwirkung im Nachauflauf: Samen unterschiedlicher Unkraut und Ungras Biotypen (Herkünfte) wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1 cm abgedeckt. Die Töpfe wurden anschließend in einem Gewächshaus (12-16h Licht, Temperatur Tag 20-22°C, Nacht 15-18°C) bis zum Applikationszeitpunkt kultiviert. Die Töpfe wurden zu unterschiedlichen BBCH Stadien zwischen 11-25 der Samen/Pflanzen, d.h. in der Regel zwischen zwei bis drei Wochen nach Beginn der Anzucht, auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert.

3. Selektivitätswirkung im Vorauflauf: Samen unterschiedlicher Kulturarten (Herkünfte) wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1 cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden im BBCH Stadium 00-10 der Samen/Pflanzen auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert.

4. Selektivitätswirkung im Nachauflauf: Samen unterschiedlicher Kulturarten (Herkünfte) wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1 cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 11-32 der Samen/Pflanzen, d.h. in der Regel zwischen zwei bis vier Wochen nach Beginn der Anzucht, auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert

5. Unkrautwirkung in der Vorsaatanwendung: Samen unterschiedlicher Unkraut und Ungras Biotypen (Herkünfte) wurden in einem mit natürlicher Erde eines Standardfeldbodens (lehmiger Schluff; nicht steril) gefüllten Topf von 8-13 cm Durchmesser ausgesät. Die Töpfe mit den Samen wurden vor der Aussaat, entsprechend 7 Tage, auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Aussaat wurden die Töpfe in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.

6. Unkrautwirkung im Vor- und Nachauflauf bei unterschiedlichen Bewässerungsbedingungen: Samen unterschiedlicher Unkraut und Ungras Biotypen (Herkünfte) wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1 cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-10 der Samen/Pflanzen auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert. Die einzelnen Vergleichsgruppen wurden dabei unterschiedlichen Bewässerungstechniken ausgesetzt. Die Bewässerung erfolgte entweder von unten oder in Abstufungen von oben (simulierte Beregnung).

7. Unkrautwirkung im Vor- und Nachauflauf bei unterschiedlichen Bodenbedingungen: Samen unterschiedlicher Unkraut und Ungras Biotypen (Herkünfte) wurden in einem mit natürlicher Erde gefüllten Topf von 8-13 cm Durchmesser ausgesät und mit einer Abdeckschicht des Bodens von etwa 1 cm abgedeckt. Für einen Vergleich der herbiziden Wirkung wurden die Pflanzen in unterschiedlichen Anzuchterden, von einem Standardfeldboden (lehmiger Schluff; nicht steril) mit geringer organischer Substanz (1,8%) bis schweren Boden und höherer organischen Substanzgehalt (6,8%) (Mischung aus Standardfeldboden und einer Einheitserde ED73 1:1), kultiviert. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-10 der Samen/Pflanzen auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.

8. Unkrautwirkung im Vor- und Nachauflauf zur Bekämpfung resistenter Ungras- / Unkrautarten: Samen unterschiedlicher Unkraut und Ungras Biotypen (Herkünfte) mit unterschiedlichen Resistenzmechanismen gegenüber verschiedenen Wirkmechanismen wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1 cm abgedeckt.. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-10 der Samen/Pflanzen auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.

9. Unkrautwirkung und Kulturselektivität im Vor- und Nachauflauf bei unterschiedlichen Aussaatbedingungen: Samen unterschiedlicher Unkraut, Ungras Biotypen (Herkünfte) und Kulturarten (Herkünfte) wurden in einem mit natürlicher Erde gefüllten Topf von 8-13 cm Durchmesser ausgesät und mit einer Abdeckschicht des Bodens von etwa 0,5-2cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-10 der Samen/Pflanzen auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.

b) Ergebnisse

Folgende Abkürzungen wurden verwendet:

BBCH = BBCH-Code gibt Auskunft über das morphologische Entwicklungsstadium einer Pflanze. Die Abkürzung steht offiziell für die Biologische Bundesanstalt, Bundessortenamt und CHemische Industrie. Der Bereich von BBCH 00-10 steht für die Stadien der Keimung der Samen bis zum Durchstoßen der Oberfläche. Der Bereich von BBCH 11-25 steht für die Stadien der Blattentwicklung bis zur Bestockung (entsprechend Anzahl der Bestockungstriebe bzw. Seitensprosse)..

PE = Vorauflaufapplikation auf den Boden; BBCH der Samen/Pflanzen 00-10

PO = Nachauflaufapplikation auf die grünen Pflanzenteile; BBCH der Pflanzen 11-25

Einmischung = die entsprechende Menge an Spritzbrühe je Fläche wurde manuell in den Boden der Abdeckschicht eingemischt.

| ED73-Boden | = Einheitserde bestehend aus Untergrundton und hochwertigen Torfen |
| IU-Boden | = lehmiger Schluff - Standardfeldboden |
| TSR | = "engl. Target-Site Resistance" - Wirkort Resistenz - Die |

Unkrautpopulationen enthalten Biotypen mit einer Wirkortspezifischen Resistenz d.h. durch natürliche Mutationen in der Gensequenz verändert sich die Bindungsstelle am Wirkort, sodass die Wirkstoff nicht mehr oder unzureichend binden und entsprechend wirken können.

| EMR | = "eng. Enhanced Metabolic Resistance" - Metabolische Resistenz - Die Unkrautpopulationen enthalten Biotypen mit einer metabolischen Resistenz d.h. die Pflanzen besitzen die Fähigkeit über Enzymkomplexe die Wirkstoffe schneller zu metabolisieren, d.h. die Wirkstoffe werden in der Pflanze schneller abgebaut. |
| HRAC | = "Herbicide Resistance Action Committee" Arbeitsgruppe der forschenden Industrien, welche die zugelassenen Wirkstoffe nach ihrem Wirkmechanismus (MoA = Mode of Action = Wirkmechanismus) einteilt (z.B HRAC Gruppe B = Acetolactatsynthase Inhibitoren (ALS)). |
| HRAC Gruppe A | = Acetylcoenzym-A-Carboxylase Inhibitoren (ACCase)). |
| HRAC Gruppe B | = Acetolactatsynthase Inhibitoren (ALS)). |
| HRAC Gruppe C1 | = Photosyntheseinhibitoren - Metribuzin |
| HRAC Gruppe K1 | = Inhibitoren der Mikrotubulianordnung - Pendimethalin. |
| HRAC Gruppe K3 | = Inhibitoren der Zellteilung - Flufenacet. |
| Dosis g AS/ha | = Aufwandmenge in Gramm Aktivsubstanz pro Hektar. |
| AS | = Aktivsubstanz (bezogen auf 100% Wirkstoff) = a.i. (englisch) |

| VIOAR | = Viola arvensis | = Unkraut |
| STEME | = Stellaria media | = Unkraut |
| MATCH | = Matricaria chamomilla | = Unkraut |
| AVEFA | = Avena fatua | = Ungras |
| POAAN | = Poa annua | = Ungras |
| APESV | = Apera Spica-venti | = Ungras |
| ALOMY | = Alopecurus myosuroides | = Ungras |
| LOLPE | = Lolium perenne | = Ungras |
| LOLSS | = Lolium species | = Ungras |
| TRZAW | = Triticum aestivum, Winterweizen | = Kulturpflanze |
| TRZAS | = Triticum aestivum, Sommerweizen | = Kulturpflanze |
| HORVW | = Hordeum vulgare, Wintergerste | = Kulturpflanze |
| HORVS | = Hordeum vulgare, Sommergerste | = Kulturpflanze |

Die Wirkungen der erfindungsgemäßen herbiziden Mittel entsprechen den gestellten Anforderungen und lösen damit die Aufgabe der Verbesserung des Anwendungsprofils des herbiziden Wirkstoffs Flufenacet (u.a. Bereitstellung flexiblerer Lösungen in Bezug auf notwendige Aufwandmengen bei gleichbleibender bis gesteigerter Wirksamkeit).

Soweit herbizide Effekte der erfindungsgemäßen Mittel im Vergleich mit Mischungen des Standes der Technik beziehungsweise mit einzeln angewendeten Komponenten gegen wirtschaftlich bedeutende mono- und dikotyle Schadpflanzen im Focus standen, wurden die synergistischen herbiziden Wirkungen anhand der'Colby-Formel' (vgl. S.R. Colby; Weeds 15 (1967), 20-22) berechnet:

$$E = (A + B + C) - (AxB + AxC + BxC)/100 + (AxBxC)/10000$$

worin bedeutet:

A, B, C = jeweils Wirkung der Komponenten A bzw. B bzw. C in Prozent bei einer Dosierung von a bzw. b Gramm AS/ha;
$E^C$ = Erwartungswert nach Colby in % bei einer Dosierung von a + b Gramm AS/ha.

$$\Delta = \text{Differenz (\%) von gemessenem Wert - \% - zu Erwartungswert - \% -}$$

$$\text{(gemessener Wert minus Erwartungswert)}$$

$\Delta^D$ = Differenz (%) von gemessenem Wert einer Beobachtung A - % - zu von gemessenem Wert einer Beobachtung B - %. Die beobachteten Werte A und B können je nach Versuchsansatz variieren und werden im Ergebnisteil definiert (z.B. Verhältnis: A = PE Applikation auf Boden, zu B = Einmischung in den Boden; oder A = PE Applikation auf Boden, zu B = Vorsaatapplikation auf den Boden etc.).

Auswertung:  - gemessene Werte: jeweils für (A), (B) und (A)+(B) in %
Bewertung:  - gemessener Wert (%) grösser > als $E^C$ : $\hat{=}$ Synergismus (+Δ)
- gemessener Wert (%) gleich = $E^C$ : $\hat{=}$ Additive Wirkung (±0Δ)
- gemessener Wert (%) kleiner < als $E^C$ : $\hat{=}$ Antagonismus (-Δ)

Die herbiziden Wirkungen der erfindungsgemäßen Mittel lagen dabei über den Erwartungswerten berechnet gemäß der'Colby-Formel'.

Gewächshausversuche

Standardmäßig, soweit nicht anders erwähnt, erfolgte die Applikation von Flufenacet als SC 500 Formulierung, entsprechend 500 g Aktivsubstanz je Liter Formulierungsprodukt. Die Applikation von Pendimethalin erfolgte als CS 455 Formulierung, entsprechend 455 g Aktivsubstanz je Liter Formulierungsprodukt. Die Applikation von Metribuzin erfolgte als WG 70 Formulierung, entsprechend 700 g Aktivsubstanz je Kilogramm Formulierungsprodukt.

Tabelle 1.: Vergleich der Wirkung der Mischungen bei Applikation PO folgend der Versuchsmethoden 2 und 4.

|  | Dosis gAS/ha | VIOAR | APESV | POAAN | HORVS |
|---|---|---|---|---|---|
| (A) Flufenacet | 240 | 50 | 65 | 65 | 60 |
| (B) Pendimethalin | 1200 | 30 | 0 | 0 | 10 |
| (C) Metribuzin | 140 | 90 | 79 | 79 | 70 |
| (A)+(B)+(C) | 240+ 1200+140 | 100 $E^c$ = 97; Δ+3 | 99 $E^c$ = 93; Δ+6 | 99 $E^c$ = 93; Δ+6 | 50 $E^c$ = 89; Δ-39 |

Im Vergleich zu der Wirkung der Einzelwirkstoffe konnte in der Mischung eine synergistische Wirkung bei den untersuchten Pflanzenarten erreicht werden (Δ +3 - +6). Gleichzeitig war nach der PO Applikation die Kulturverträglichkeit deutlich verbessert (Δ -39; negative Werte für Kulturpflanzen bedeuten eine verbesserte Kulturpflanzenverträglichkeit). In der Mischung wird die Anwendungsflexibilität der Wirkstoffe erweitert. Die Einzelwirkstoffe werden in erster Linie nur PE angewendet, sodass mit der Mischung eine Anwendung zu späteren Wachstumsstadien ermöglicht wird.

Kommentar: In der PO Applikation werden die Wirkungssicherheit und die Kulturpflanzenverträglichkeit verbessert.

Tabelle 2.: Vergleich der Wirkung der Mischungen bei Applikation im Vorsaatverfahren folgend der Versuchsmethode 1, 3 und 5.

| PE Applikation | Dosis gAS/ha | MATCH | AVEFA | HORVS |
|---|---|---|---|---|
| (A) Flufenacet | 90 | 15 | 63 | 80 |
| (B) Pendimethalin | 1200 | 18 | 40 | 50 |
| (C) Metribuzin | 140 | 60 | 30 | 10 |
| (A)+(B)+(C) | 90+1200+140 | 100<br>$E^c$ = 72; $\Delta$+28 | 92<br>$E^c$ = 84; $\Delta$+8 | 89<br>$E^c$ = $\Delta$91; -2 |
| | | | | |
| Applikation 7 Tage vor Aussaat- | Dosis gAS/ha | LOLPE | AVEFA | HORVS |
| (A) Flufenacet | 90 | 93 | 70 | 40 |
| (B) Pendimethalin | 1200 | 0 | 70 | 30 |
| (C) Metribuzin | 140 | 100 | 0 | 20 |
| (A)+(B)+(C) | 90+1200+140 | 100<br>$E^c$ = 100; $\Delta$±0 | 100<br>$E^c$ = 91; $\Delta$+9 | 60<br>$E^c$ = $\Delta$80; $\Delta$-20 |
| $\Delta^D$ = A: Applikation vor Aussaat - B: PE Applikation | | $\Delta^D$ ±0 | $\Delta^D$ +8 | $\Delta^D$ -29 |

Im Vergleich zu der Wirkung der Einzelwirkstoffe konnte in der Mischung sowohl bei PE Applikation als auch bei der Vorsaatanwendung eine synergistische Wirkung bei den untersuchten Pflanzenarten erreicht werden ($\Delta$ ±0 - +28). Gleichzeitig war nach der Vorsaat Applikation die Kulturverträglichkeit verbessert ($\Delta$ -20; negative Werte für Kulturpflanzen bedeuten eine verbesserte Kulturverträglichkeit). Im Vergleich der PE Anwendung zur Vorsaatanwendung, konnte in der Mischung eine weitere Verbesserung der Wirkung erzielt werden ($\Delta^D$ ±0 - +8). Zusätzlich wurde die Kulturverträglichkeit ebenfalls verbessert ($\Delta^D$ -29 negative Werte für Kulturpflanzen bedeuten eine verbesserte Kulturpflanzenverträglichkeit). Einzelwirkstoffe werden in erster Linie nur PE angewendet, sodass mit der Mischung eine Anwendung zu späteren Wachstumsstadien ermöglicht wird.

Kommentar: In der Vorsaat Applikation wird durch die Mischung die Wirkungssicherheit verbessert bei einer zusätzlich verbesserten Kulturverträglichkeit.

Tabelle 3.: Vergleich der Wirkung der Mischung bei PE Applikation bei unterschiedlichen Bewässerungen Varianten folgend der Versuchsmethode 6.

| Bewässerung von oben | Dosis gAS/ha | LOLPE | MATCH |
|---|---|---|---|
| (A) Flufenacet | 90 | 82 | 49 |
| (B) Pendimethalin | 1200 | 75 | 30 |
| (C) Metribuzin | 140 | 55 | 0 |
| (A)+(B)+(C) | 90+1200+90 | 100<br>$E^c$ = $\Delta$98; $\Delta$+2 | 100<br>$E^c$ = $\Delta$64; $\Delta$+36 |
| | | | |
| Bewässerung von unten | Dosis gAS/ha | LOLPE | MATCH |
| (A) Flufenacet | 90 | 75 | 15 |
| (B) Pendimethalin | 1200 | 10 | 18 |
| (C) Metribuzin | 140 | 48 | 60 |
| (A)+(B)+(C) | 90+1200+140 | 100<br>$E^c$= $\Delta$88; $\Delta$+12 | 100<br>$E^c$ = $\Delta$72; $\Delta$+28 |

(fortgesetzt)

| Bewässerung von oben | Dosis gAS/ha | LOLPE | MATCH |
|---|---|---|---|
| $\Delta^D$ = A: Bewässerung von oben - B: Bewässerung von unten | | $\Delta^D \pm 0$ | $\Delta^D \pm 0$ |

Im Vergleich zu der Wirkung der Einzelwirkstoffe konnte in der Mischung sowohl bei Bewässerung von oben als auch bei der Bewässerung von unten eine synergistische Wirkung bei den untersuchten Pflanzenarten erreicht werden ($\Delta$+2 - +36). Die Einzelwirkstoffe verlieren aufgrund ihrer chemischen Eigenschaften bei bestimmten Bewässerungsbedingungen ihre Wirkung (z.B. Flüchtigkeit - Gasphase, Wasserlöslich - Auswaschung, Wasserlöslich - Einwaschung in Wurzelzone führt zur höheren Schädigung).

Kommentar: In der PE Applikation wird bei einer unterschiedlichen Bewässerung eine vergleichbare Wirkung erzielt. Die Anwendung wird dadurch unabhängiger von den Feuchtebedingungen und Regenereignissen.

Tabelle 4.: Vergleich der Wirkung der Mischung bei unterschiedlichen Bodenarten folgend der Versuchsmethode 7.

| | Dosis gAS/ha | MATCH IU-Boden | MATCH IU/EC73-Boden | Differenz der Bodenarten |
|---|---|---|---|---|
| (A) Flufenacet | 90 | 28 | 5 | -23 |
| (B) Pendimethalin | 1200 | 10 | 0 | -10 |
| (C) Metribuzin | 140 | 0 | 15 | +15 |
| (A)+(B)+(C) | 90+1200+140 | 100 $E^c = \Delta35; \Delta+65$ | 100 $E^c= \Delta19; \Delta+81$ | $\pm 0$ |
| Differenz $\Delta^D$ der Wirkung der Einzelwirkstoffe (Ø) | | | | $\Delta^D$ -6 |
| Differenz $\Delta^D$ der Wirkung der Mischung zur Differenz $\Delta^D$ der durchschnittlichen Wirkung der Einzelwirkstoffe | | | | $\Delta^D$ +6 |
| | | | | |
| Boden - sL | Dosis gAS/ha | STEME IU-Boden | STEME IU/EC73-Boden | Differenz der Bodenarten |
| (A) Flufenacet | 90 | 0 | 0 | $\pm 0$ |
| (B) Pendimethalin | 1200 | 85 | 55 | -30 |
| (C) Metribuzin | 140 | 75 | 5 | -70 |
| (A)+(B)+(C) | 90+1200+140 | 98 $E^c = \Delta96; \Delta+2$ | 100 $E^c = \Delta57; \Delta+43$ | +2 |
| Differenz $\Delta^D$ der Wirkung der Einzelwirkstoffe (Ø) | | | | $\Delta^D$ -33 |
| Differenz $\Delta^D$ der Wirkung der Mischung zur Differenz $\Delta^D$ der durchschnittlichen Wirkung der Einzelwirkstoffe | | | | $\Delta^D$ +31 |
| | Dosis gAS/ha | HORVS IU-Boden | HORVS IU/EC73-Boden | Differenz der Bodenarten |
| (A) Flufenacet | 90 | 10 | 0 | -10 |
| (B) Pendimethalin | 1200 | 0 | 0 | $\pm 0$ |
| (C) Metribuzin | 140 | 20 | 0 | -20 |
| (A)+(B)+(C) | 90+1200+140 | 38 $E^c = \Delta28; \Delta+10$ | 5 $E^c = \Delta0; \Delta+5$ | -33 |
| Differenz $\Delta^D$ der Wirkung der Einzelwirkstoffe (Ø) | | | | $\Delta^D$ -10 |
| Differenz $\Delta^D$ der Wirkung der Mischung zur Differenz $\Delta^D$ der durchschnittlichen Wirkung der Einzelwirkstoffe | | | | $\Delta^D$ -23 |

Im Vergleich zu der Wirkung der Einzelwirkstoffe konnte in der Mischung eine synergistische Wirkung bei den untersuchten Pflanzenarten erreicht werden ($\Delta$ +2 - +81). Die Anwendbarkeit der Einzelwirkstoffe wird durch die Bodeneigenschaften begrenzt d.h. die Einzelwirkstoffe lassen sich nicht oder nur begrenzt auf Böden mit höheren Tongehalten und höheren organischen Substanzgehalten anwenden. Wie erwartet nimmt die Wirkung der Einzelwirkstoffe in Böden mit einem höheren Gehalt an Ton und organischer Substanz ab (Abnahme Ø $\Delta^D$ +15 - -70%) (u.a. durch Bindung an Ton/Humuskomplexe und höherer mikrobiologischen Aktivität, welche zum beschleunigten Abbau führt). Die Mischung stabilisiert die Wirkung in unterschiedlichen Böden im Vergleich zu den Einzelwirkstoffen. Während die Wirkung der Einzelwirkstoffe um durchschnittlich Ø$\Delta^D$ 20% (Abnahme Ø$\Delta^D$ -6 - - 33%) im schweren Boden abnimmt, nimmt die Wirkung der Mischung um Ø$\Delta^D$ 1% (Ø$\Delta^D$ ±0 - +2%) zu. Die Mischung hat einen Vorteil von Ø$\Delta^D$ +19% (Abnahme Ø$\Delta^D$ +6 - +31%). Gleichzeitig verbessert sich die Kulturpflanzenverträglichkeit mit der Mischung um $\Delta^D$ -23% (negative Werte für Kulturpflanzen bedeuten eine verbesserte Kulturpflanzenverträglichkeit). Dadurch wird die Anwendungsflexibilität der Mischung auf unterschiedlichen Bodentypen verbessert.
Kommentar: Die Mischung verbessert die Wirkung in unterschiedlichen Böden im Vergleich zu den Einzelwirkstoffen.

Tabelle 5.: Vergleich der Wirkung der Mischung auf resistente Biotypen nach PE Applikation folgend der Versuchsmethode 8.

| | Dosis gAS/ha | ALOMY sensitiv | ALOMY resistent | LOLSS sensitiv | LOLSS resistent |
|---|---|---|---|---|---|
| (A) Flufenacet | 90 | 80 | 68 | 5 | 10 |
| (B) Pendimethalin | 1200 | 30 | 40 | 78 | 0 |
| (C) Metribuzin | 140 | 85 | 80 | 70 | 70 |
| (A)+(B)+(C) | 90+1200+140 | 100 $E^c = \Delta 98; \Delta +2$ | 100 $E^c = \Delta 96; \Delta +4$ | 100 $E^c = \Delta 99; \Delta +1$ | 98 $E^c = \Delta 73; \Delta +25$ |
| (C)[1] Iodosulfuron | 10 | 90 | 40 | 98 | 50 |
| [1]Vergleichsprodukt zur Darstellung der vorhandenen Resistenz in den unterschiedlichen Biotypen. Iodosulfuron ist ein Wirkstoff aus der HRAC Gruppe B. Kommentar: Bei allen untersuchten Pflanzenarten konnte durch die Mischung aufgrund des hohen Wirkungsgrades nur eine geringe synergistische Wirkung nachgewiesen werden ($\Delta$+1 - +25). Die Wirkungssicherheit gegen TSR und EMR resistente Biotypen wird durch die Mischung deutlich verbessert. Wirkstoffe der HRAC Gruppe K1, K3 und C1 eignen sich in der Mischung hervorragend für ein effektives Resistenzmanagement | | | | | |

Kommentar: In der PE Applikation wird die Wirkungssicherheit gegen TSR und EMR resistente Biotypen verbessert.

Tabelle 6.: Vergleich der Wirkung der Mischung auf bei unterschiedlichen Aussaattiefen bei PE Applikation folgend der Versuchsmethode 9

| | Dosis gAS/ha | MATCH 5mm | MATCH 20mm | HORVS 5mm | HORVS 20mm |
|---|---|---|---|---|---|
| (A) Flufenacet | 90 | 30 | 30 | 30 | 20 |
| (B) Pendimethalin | 1200 | 0 | 30 | 30 | 20 |
| (C) Metribuzin | 140 | 100 | 70 | 70 | 30 |
| (A)+(B)+(C) | 90+1200+140 | 100 $E^c = \Delta 100; \Delta +0$ | 100 $E^c = \Delta 85; \Delta +15$ | 30 $E^c = \Delta 85; \Delta -55$ | 10 $E^c = \Delta 55; \Delta -45$ |
| Aussaatdifferenz $\Delta^D$ = A: Aussaattiefe 20mm - B: Aussaattiefe 5mm | | $\Delta^D \pm 0$ | | $\Delta^D$ -20 | |

Bei allen untersuchten Pflanzenarten konnte durch die Mischung aufgrund des hohen Wirkungsgrades nur eine geringe synergistische Wirkung nachgewiesen werden ($\Delta \pm 0$ - +15). Die Kulturverträglichkeit generell verbesserte sich in der Mischung im Vergleich zu den Einzelwirkstoffen unerwartet deutlich um $\Delta$ -45 - -55 (negative Werte für Kulturpflanzen bedeuten eine verbesserte Kulturpflanzenverträglichkeit). Diese Beobachtung ist außergewöhnlich, da in der Regel PE applizierte Wirkstoffe am besten bei flachkeimenden Unkrautpflanzen wirken und schlechter bei tiefkeimenden Unkrautpflanzen.

Kommentar: In der PE Applikation wird durch die Mischung der drei Wirkstoffe die Wirkungssicherheit gegen Pflanzen die aus unterschiedlichen Tiefen auflaufen verbessert.

Tabelle 7.: Vergleich der Wirkung der Mischung bei unterschiedlichen pH-Wert des Bodens bei PE Applikation folgend der Versuchsmethode 10.

| | Dosierung gAS/ha | HORVS pH 7.4 | HORVS pH 8.4 | AVEFA pH 7.4 | AVEFA pH 8.4 |
|---|---|---|---|---|---|
| (A) Flufenacet | 90 | 10 | 10 | 80 | 55 |
| (B) Pendimethalin | 1200 | 0 | 15 | 10 | 30 |
| (C) Metribuzin | 140 | 40 | 50 | 90 | 90 |
| (A)+(B)+(C) | 90+1200+140 | 40 $E^c$ = 46; $\Delta$-6 | 40 $E^c$ = 62; $\Delta$-22 | 99 $E^c$ = 98; $\Delta$+1 | 100 $E^c$ = 97; $\Delta$+3 |
| pH-Wert Differenz $\Delta^D$ = A: pH-Wert 7.4 - B: pH-Wert 8.4 | | $\Delta^D \pm 0$ | | $\Delta^D$ -1 | |

Bei allen untersuchten Pflanzenarten konnte durch die Mischung aufgrund des hohen Wirkungsgrades nur eine geringe synergistische Wirkung nachgewiesen werden ($\Delta$ +1 - +3). Die Kulturverträglichkeit generell verbesserte sich in der Mischung deutlich im Vergleich zu den Einzelwirkstoffen ($\Delta$ -6 - -22; negative Werte für Kulturpflanzen bedeuten eine verbesserte Kulturpflanzenverträglichkeit). Durch den höheren pH-Wert des Bodens wurde generell die Kulturpflanzenverträglichkeit in der Mischung verbessert.

Kommentar: In der PE Applikation wird bei einem höheren pH des Bodens die Selektivität verbessert bei vergleichender Wirkung im Vergleich zu den Einzelwirkstoffen.

## Patentansprüche

1. Herbizide Mittel, enthaltend als einzige herbizid wirksame Bestandteile

   A) Flufenacet (Komponente A),
   B) Pendimethalin (Komponente B) und
   C) Metribuzin (Komponente C);

   wobei die Herbizid-Komponenten gemeinsam ausgebracht werden und worin die Herbizid-Komponenten im nachstehend angegebenen Gewichtsverhältnis zueinander stehen:

   (Bereich Komponente A) : (Bereich Komponente B) : (Bereich Komponente C) (1 - 10) : (20 - 75) : (1 - 10).

2. Herbizide Mittel nach Anspruch 1, enthaltend für die jeweiligen Herbizid-Komponenten nachstehend angegebenen Aufwandmengen:

   Komponente A: 50 - 300 g AS/ha Flufenacet;
   Komponente B: 600 - 2200 g AS/ha Pendimethalin;
   Komponente C: 30 - 300 g AS/ha Metribuzin.

3. Herbizide Mittel nach Anspruch 1 oder 2, zusätzlich enthaltend im Pflanzenschutz übliche Zusatzstoffe und/oder Formulierungshilfsmittel.

4. Herbizide Mittel nach einem der Ansprüche 1 bis 3, zusätzlich enthaltend eine oder mehrere weitere Komponenten aus der Gruppe agrochemischer Wirkstoffe umfassend Insektizide, Fungizide und Safener.

5. Herbizide Mittel nach einem der Ansprüche 1 bis 4, zusätzlich enthaltend einen Safener.

6.  Verfahren zur Bekämpfung von unerwünschtem Pflanzenwuchs, worin die Komponenten A, B und C der herbiziden Mittel, definiert gemäß einem der Ansprüche 1 bis 5, gemeinsam auf die Pflanzen, Pflanzenteile, Pflanzensamen oder die Fläche, auf der die Pflanzen wachsen, appliziert werden.

7.  Verfahren nach Anspruch 6 zur selektiven Bekämpfung von Schadpflanzen in Pflanzenkulturen.

8.  Verfahren nach Anspruch 7, worin die Pflanzenkulturen gentechnisch verändert oder durch Mutationsselektion erhalten wurden.

9.  Verwendung der nach einem der Ansprüche 1 bis 5 definierten herbiziden Mittel zur Bekämpfung von Schadpflanzen.

10. Verwendung der nach einem der Ansprüche 1 bis 5 definierten herbiziden Mittel zur Bekämpfung von herbizid-resistenten Schadpflanzen.

**Claims**

1.  A herbicidal composition comprising, as only herbicidally active components,

    A) flufenacet (component A),
    B) pendimethalin (component B) and
    C) metribuzin (component C);

    wherein the herbicide components are applied jointly and in which the herbicide components are present in the weight ratio stated below:

    (range component A):(range component B):(range component C)
    (1 - 10) : (20 - 75):(1 - 10).

2.  The herbicidal composition as claimed in claim 1 comprising the application rates stated below for the respective herbicide components:

    component A: 50 - 300 g of AS/ha flufenacet;
    component B: 600 - 2200 g of AS/ha pendimethalin;
    component C: 30 - 300 g of AS/ha metribuzin.

3.  The herbicidal composition as claimed in claim 1 or 2, additionally comprising formulation auxiliaries and/or additives customary in crop protection.

4.  The herbicidal composition as claimed in any of claims 1 to 3, additionally comprising one or more further components from the group of the agrochemically active compounds comprising insecticides, fungicides and safeners.

5.  The herbicidal composition as claimed in any of claims 1 to 4, additionally comprising a safener.

6.  A method for controlling unwanted vegetation wherein the components A, B and C of the herbicidal compositions, defined according to any of claims 1 to 5, are applied jointly to the plants, plant parts, plant seeds or to the area on which the plants grow.

7.  The method as claimed in claim 6 for the selective control of harmful plants in crop plants.

8.  The method as claimed in claim 7 wherein the crop plants are genetically modified or have been obtained by mutation selection.

9.  The use of the herbicidal compositions defined according to any of claims 1 to 5 for the control of harmful plants.

10. The use of the herbicidal compositions defined according to any of claims 1 to 5 for the control of herbicide-resistant harmful plants.

**Revendications**

1. Agent herbicide, contenant, comme uniques constituants à effet herbicide,

   A) du flufénacet (composant A),
   B) du pendiméthaline (composant B) et
   C) de la métribuzine (composant C) ;

   les composants herbicides étant appliqués ensemble et dans lequel les composants herbicides se trouvent dans une relation pondérale les uns par rapport aux autres indiquée ci-après :

   (plage composant A):(plage composant B):(plage composant C) = (1-10):(20-75):(1-10).

2. Agent herbicide selon la revendication 1, contenant pour les différents composants herbicides les quantités d'emploi indiquées ci-après :

   Composant A : 50-300 g de SA/ha de flufénacet ;
   Composant B : 600-2200 g de SA/ha de pendiméthaline ;
   Composant C : 30-300 g de SA/ha de métribuzine.

3. Agent herbicide selon la revendication 1 ou 2, contenant en outre des additifs et/ou des adjuvants de formulation usuels dans la phytoprotection.

4. Agent herbicide selon l'une quelconque des revendications 1 à 3, contenant en outre un ou plusieurs autres composants du groupe des substances actives agrochimiques, comprenant les insecticides, les fongicides et les antidotes.

5. Agent herbicide selon l'une quelconque des revendications 1 à 4, contenant en outre un antidote.

6. Procédé pour lutter contre une croissance non souhaitée de plantes, les composants A, B et C de l'agent herbicide, définis selon l'une quelconque des revendications 1 à 5, étant appliqués ensemble sur les plantes, les parties de plantes, les graines de plantes ou la surface sur laquelle les plantes poussent.

7. Procédé selon la revendication 6 pour la lutte sélective contre les plantes nuisibles dans les cultures de plantes.

8. Procédé selon la revendication 7, dans lequel les cultures de plantes ont été génétiquement modifiées ou obtenues par sélection de mutations.

9. Utilisation de l'agent herbicide défini selon l'une quelconque des revendications 1 à 5 pour lutter contre les plantes nuisibles.

10. Utilisation de l'agent herbicide défini selon l'une quelconque des revendications 1 à 5 pour lutter contre des plantes nuisibles résistantes aux herbicides.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5985797 B
- US 5593942 B
- US 5912206 B
- US 5811373 B
- US 5858920 B
- US 6967188 B
- US 6492301 B
- US 6864217 B
- US 6486096 B
- US 20030069138 A
- WO 2002058472 A
- US 6365550 B
- US 20030060367 A
- US 6878675 B
- US 6071858 B
- WO 2007112834 A
- US 5759955 A
- EP 0221044 A
- EP 0131624 A
- WO 92011376 A
- WO 92014827 A
- WO 91019806 A
- EP 0242236 A
- EP 0242246 A
- WO 92000377 A
- EP 0257993 A
- US 5013659 A
- EP 0142924 A
- EP 0193259 A
- WO 91013972 A
- EP 0309862 A
- EP 0464461 A
- EP 0305398 A
- EP 0476555 A
- EP 0048436 A
- EP 0336151 A
- US 4400196 A
- EP 0502014 A

**In der Beschreibung aufgeführte Nicht-Patentliteratur**

- The e-Pesticide Manual. The Compendium of Pesticide Common Names. British Crop Protection Council and the Royal Soc. of Chemistry
- Gene Transfer to Plants. Springer Lab Manual, 1995
- **CHRISTOU.** Trends in Plant Science. Springer Verlag Berlin, 1996, vol. 1, 423-431
- **SAMBROOK et al.** Molecular Cloning, A Laboratory Manual. Cold Spring Harbor Laboratory Press, Cold Spring Harbor, NY, 1989
- **GENE ; KLONE.** Winnacker. VCH, 1996
- **BRAUN et al.** *EMBO J.,* 1992, vol. 11, 3219-3227
- **WOLTER et al.** *Proc. Natl. Acad. Sci. USA,* 1988, vol. 85, 846-850
- **SONNEWALD et al.** *Plant J.,* 1991, vol. 1, 95-106
- Manual on Development and Use of FAO and WHO Specifications for Pesticides. *FAO and WHO,* 2002
- **WINNACKER-KÜCHLER.** Chemische Technologie. C. Hanser Verlag, 1986, vol. 7
- **VAN VALKENBURG.** Pesticide Formulations. Marcel Dekker, 1973
- **K. MARTENS.** Spray Drying Handbook. G. Goodwin Ltd
- **WATKINS.** Handbook of Insecticide Dust Diluents and Carriers. Darland Books
- **H.V. OLPHEN.** Introduction to Clay Colloid Chemistry. J. Wiley & Sons
- **MARSDEN.** Solvents Guide. Interscience, 1950
- **MCCUTCHEON'S.** Detergents and Emulsifiers Annual. MC Publ. Corp,
- **SISLEY ; WOOD.** Encyclopedia of Surface Active Agents. Chem. Publ. Co. Inc, 1964
- **SCHÖNFELDT.** Grenzflächenaktive Äthylenoxidaddukte. Wiss. Verlagsgesellschaft, 1976
- **VERFAHREN.** Spray-Drying Handbook. G. Goodwin Ltd, 1979
- **J.E. BROWNING.** Agglomeration. *Chemical and Engineering,* vol. 1967, 147
- Perry's Chemical Engineer's Handbook. Mc-Graw-Hill, 1973, 8-57
- **G.C. KLINGMAN.** Weed Control as a Science. John Wiley and Sons, Inc, 1961, 81-96
- **J.D. FREYER ; S.A. EVANS.** Weed Control Handbook. Blackwell Scientific Publications, 1968, 101-103
- Römpp Chemie Lexikon. Thieme Verlag, vol. 2, 1343
- **S.R. COLBY.** *Weeds,* 1967, vol. 15, 20-22